(19) Europäisches Patentamt
European Patent Office
Office européen des brevets

(11) EP 0 371 411 B1

(12) EUROPEAN PATENT SPECIFICATION

(45) Date of publication and mention of the grant of the patent: **06.03.1996 Bulletin 1996/10**

(51) Int Cl.[6]: **C08F 4/68**, C08F 10/00, C08F 4/629

(21) Application number: **89121758.0**

(22) Date of filing: **24.11.1989**

# (54) A method for producing olefin polymers

Verfahren zur Herstellung von Olefinpolymeren

Procédé de production de polymères d'oléfines

(84) Designated Contracting States:
**BE DE FR GB IT NL**

(30) Priority: **26.11.1988 JP 299060/88**

(43) Date of publication of application:
**06.06.1990 Bulletin 1990/23**

(73) Proprietor: **SUMITOMO CHEMICAL COMPANY, LIMITED**
**Osaka-shi, Osaka (JP)**

(72) Inventors:
- **Kakugo, Masahiro**
**Narashino-shi (JP)**
- **Miyatake, Tatsuya**
**Ichihara-shi, Chiba-ken 299-01 (JP)**
- **Mizunuma, Kouji**
**Ichihara-shi, Chiba-ken 299-01 (JP)**
- **Yagi, Yoshio**
**Ichihara-shi, Chiba-ken 299-01 (JP)**

(74) Representative: **VOSSIUS & PARTNER**
**Postfach 86 07 67**
**D-81634 München (DE)**

(56) References cited:
**EP-A- 0 222 504**
**EP-A- 0 241 560**
**US-A- 4 528 339**
**US-A- 4 578 374**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a method for producing homopolymers of an olefin having two or more carbon atoms or copolymers of two kinds or more of olefins.

In the conventional production of olefin polymers, there has generally been used a catalytic system comprising a solid titanium compound consisting mainly of titanium trichloride and an organoaluminum compound, and a catalytic system comprising titanium tetrachloride supported on magnesium chloride, an organoaluminum compound and an electron donor. Further, there is proposed a method in which olefin polymers are produced with $Ti(OR)_nX_{4-n}$, an aluminoxane and at least two kinds of aromatic hydrocarbon compounds having a hydroxyl group as catalytic components (PCT int. Appl. WO 87-2370A1). On the other hand, there are also proposed methods using a polymerization catalyst comprising a titanocene, zirconocene or hafnocene compound and aluminoxane (e.g. JP-A-58-19309, JP-A-60-217209). However, the methods using these catalyst systems have a drawback that the molecular weight of the olefin polymers obtained is small.

Vanadium compounds represented by $VOCl_3$ are used in industry as a catalyst for producing ethylene/propylene rubbers in combination with, for example, ethylaluminum sesquichloride. This catalyst, however, is very low in catalytic activity for propylene homopolymerization, so that its industrial value as a catalyst for propylene polymerization is not admitted.

EP-A-0241560 describes a catalyst for olefin polymerization comprising a catalyst component (A) of the formula M (R),$(OR')_mX_n$-(1+m) (wherein M represents a transition metal atom), a catalyst component (B) which is an aluminoxane and a catalyst component (C) which is an organic compound having at least 2 hydroxyl groups.

An object of the present invention is to provide a method for producing olefin polymers by using a novel catalyst system substituting the above catalyst systems containing transition metals.

The present invention provides a method for producing high-molecular-weight olefin polymers with high efficiency using a catalyst system comprising a vanadyl compound having a particular structure and an aluminoxane or a mixture of said aluminoxane and an organoaluminum compound, and it is characterized by using the following catalyst systems.

That is, the present invention provides a method for producing olefin polymers which comprises 20 homopolymerizing an olefin or copolymerizing two or more olefins using a catalyst system comprising

catalyst component (A): a vanadium compound represented by the formula $VOX_3$ in which X represents a halogen atom, or $VO(OR)_3$ in which R represents a $C_1$-$C_{20}$ hydrocarbon group, and

catalyst component (B): an aluminoxane obtained by the reaction of a trialkylaluminum represented by the formula $AlR^a_3$ in which $R^a$ represents a $C_1$-$C_{10}$ alkyl group with water, or a mixture of said aluminoxane and an aluminum compound represented by the formula $AlR'_nX'_{3-n}$ in which R' represents a $C_1$-$C_{10}$ alkyl group, X′ represents a halogen atom and n represents a number selected from 0, 1, 2 and 3, and

catalyst component (C): an organic compound having at least two hydroxyl groups which is reacted with catalyst component (A) before use. Catalyst component (C) is preferably represented by the formula I, II, III, IV, V or VI:

$$HO - R'' - (Y)_n' - R''' - OH \quad (I)$$

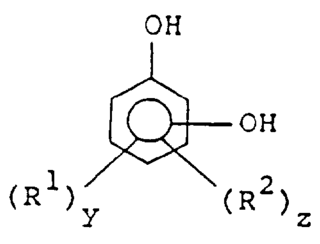

(II)

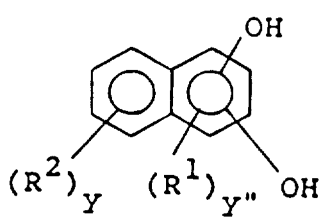

(III)

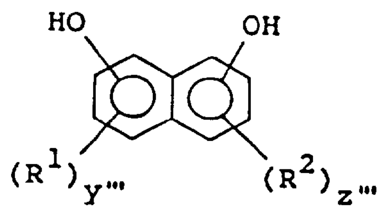

(IV)

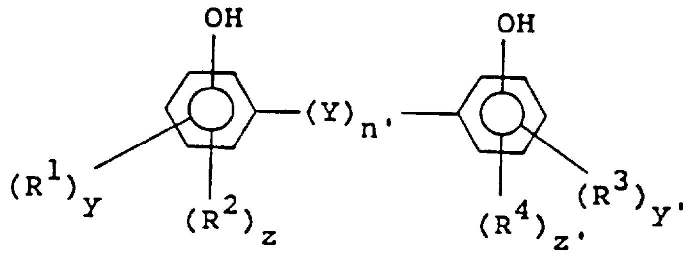

(V)

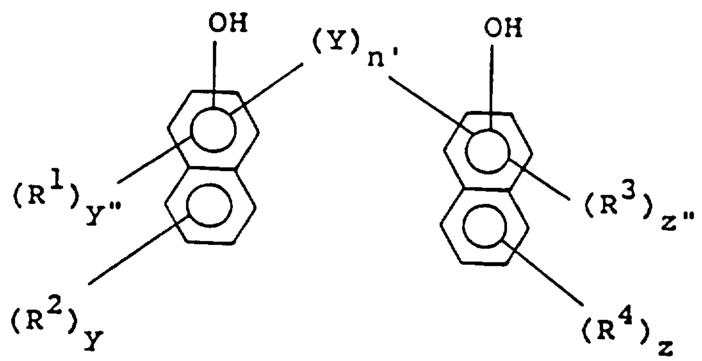

(VI)

wherein each of R" and R"' represents a $C_1$-$C_{20}$ hydrocarbon group; Y represents a $C_1$-$C_{20}$ hydrocarbon group, -O-, -S-, -S-S-,

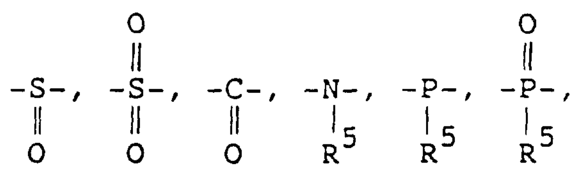

or

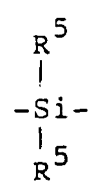

(in which $R^5$ represents a hydrogen atom or a $c_1$-$c_6$ hydrocarbon group); each of $R^1$, $R^2$ , $R^3$ and $R^4$, which may be the same or different, represents. a $c_1$-$c_{20}$ hydrocarbon, hydroxyl, nitro, nitrile or hydrocarbyloxy group or a halogen atom; n' is an integer of 0, or 1 or more and represents the number of repeats of a unit Y; each of y, y', y", y"', z, z', z" and z"' represents the number of substituents bonded to the aromatic ring; each of y, y', z and z' represents an integer of 0, or 1 to 4; each of y" and z" represents an integer of 0, or 1 to 2; and each of y"' and z"' represents an integer of 0, or 1 to 3.

According to the present invention, high molecular weight olefin polymers can be produced in high yields by homopolymerizing an olefin or copolymerizing two or more olefins using the novel catalyst system of the present invention comprising a vanadium compound represented by the formula $VOX_3$ or $VO(OR)_3$ and an aluminoxane or a mixture of said aluminoxane and an aluminum compound and an organic compound having at least two hydroxyl groups.

Figs. 1 is a flow chart for better understanding of the present invention. This flow chart is given as a representative examples of an embodiment of the present invention, and not to be interpreted as limiting the present invention thereto.

The present invention will be explained in detail hereinafter.

Specific examples of the vanadium compound of the formula $VOX_3$ (in which X is a halogen atom) or $VO(OR)_3$ (in

which R is a $C_1$-$C_{20}$ hydrocarbon group) used as the catalyst component (A) in the present invention include vanadium oxytrichloride, vanadium oxytribromide, and vanadium compounds of the formula $VO(OR)_3$, wherein R represents methyl, ethyl, n-propyl, isopropyl, n-butyl, isobutyl, tert-butyl, 1-methylbutyl, 2-methylbutyl, neopentyl, 2-ethylbutyl, cyclohexyl, alkylcyclohexyl or phenyl.

The aluminoxane, catalyst component (B), is a polymer of an aluminum compound, and it exists generally in the form of $R^a(AlR^aO)_nAlR^a$ (linear compound) and/or $(AlR^aO)_{n+1}$ (cyclic compound). In the formula, $R^a$ represents a $C_1$-$C_{10}$ alkyl group such as for example methyl, ethyl, propyl, butyl and pentyl. Particularly, methyl and ethyl are preferred. n is an integer of 1 or more, and particularly integers of 1 to 40 are preferred.

The aluminoxane is obtained by the reaction of a trialkylaluminum (represented by the formula $AlR^a_3$ in which $R^a$ represents a $C_1$-$C_{10}$ alkyl group such as for example methyl, ethyl, propyl, butyl or pentyl), normally dissolved in a suitable hydrocarbon solvent, with water. In this case, it is preferred to carry out the contact under mild conditions. For example, there is a method in which a solution of the aluminum compound is brought into contact with steam and a method in which an organic solvent saturated with water is gradually dropped into, a solution of the aluminum compound. Alternatively, there is also a method in which the aluminum compound is reacted with copper sulfate hydrate ($CuSO_4\cdot5H_2O$) or aluminum sulfate hydrate [$Al_2(SO_4)_3\cdot18H_2O$]. Usually, when the aluminoxane is synthesized from trimethylaluminum and water, the linear compound and the cyclic compound are obtained at the same time. The molar ratio of the aluminum compound to water is selected so that the amount of water is equimolar with 1 mole of the aluminum compound.

As specific examples of the aluminum compound of the formula $AlR'_nX'_{3-n}$ (in which R′ is a $C_1$-$C_{10}$ alkyl group, X′ is a halogen atom and n is a number selected from 0, 1, 2 and 3) used in a mixture with the aluminoxane, there are mentioned methylaluminum dichloride, ethylaluminum dichloride, n-propylaluminum dichloride, ethylaluminum sesquichloride, dimethylaluminum chloride, diethylaluminum chloride, di-n-propylaluminum chloride, trimethylaluminum, triethylaluminum, triisobutylaluminum, ethyldicyclohexylaluminum, triphenylaluminum, diethylaluminum bromide, diethylaluminum iodide, aluminum trichloride and aluminium tribromide.

Among these, diethylaluminum chloride and ethylaluminum sesquichloride give particularly preferred results.

In the compounds of the above-mentioned formulae I to VI used as the catalyst component (C) in the present invention,

each of R″ and R‴ represents a $C_1$-$C_{20}$ hydrocarbon group; Y represents a $C_1$-$C_{20}$ hydrocarbon group -O-, -S-, -S-S-,

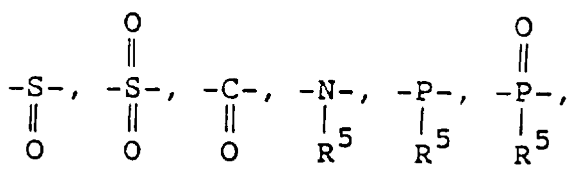

or

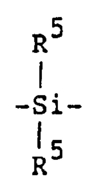

(in which $R^5$ is a $C_1$-$C_6$ hydrocarbon group). Examples for the $C_1$-$C_{20}$ hydrocarbon group represented by R″, R‴ and Y include a methylene, ethylene, propylene, diphenylmethylene, ethylidene, n-propylidene, isopropylidene, n-butylidene and isobutylidene group. Among these, the methylene, ethylene, ethylidene, isopropylidene and isobutylidene groups are preferably used.

In the above formulae, n′ is an integer of 0, or 1 or more, and it represents the number of repeats of the unit Y. Particularly, 0 or 1 gives preferred results.

Each of $R^1$, $R^2$, $R^3$ and $R^4$ represents a $C_1$-$C_{20}$ hydrocarbon, hydroxyl, nitro, nitrile or hydrocarbyloxy group or a halogen atom. The $C_1$-$C_{20}$ hydrocarbon group includes alkyl groups such as methyl, ethyl, n-propyl, isopropyl, n-butyl, isobutyl, tert-butyl, n-amyl, isoamyl, n-hexyl, n-heptyl, n-octyl, n-decyl and n-dodecyl; aryl groups such as phenyl and naphthyl; cycloalkyl groups such as cyclohexyl and cyclopentyl; allyl groups such as propenyl; and aralkyl groups such as benzyl. Among these, $C_1$-$C_{10}$ alkyl groups are preferably used.

Each of y, y′, y″, y‴, z, z′, z″ and z‴ represents the number of substituents bonded to the aromatic ring; each of y, y′, z and z′ represents an integer of 0, or 1 to 4; each of y″ and z″ represents an integer of 0, or 1 to 2; and each of y‴ and z‴ represents an integer of 0, or 1 to 3.

Specific examples of the catalyst component (C) include for example 2,4-dihydroxypentane, 2-(2-hydroxypropyl) phenol, catechol, resorcinol, 4-isopropylcatechol, 3-methoxycatechol, 1,8-dihydroxynaphthalene, 1,2-dihydroxynaphthalene, 2,2′-biphenyldiol, 1,1′-bi-2-naphthol, 2,2′-dihydroxy-6,6′-dimethylbiphenyl, 4,4′,6,6′-tetra-tert butyl-2,2′-methylenediphenol, 4,4′-dimethyl-6,6′-di-tert-butyl-2,2′-methylenediphenol, 4,4′,6,6′-tetramethyl-2,2′-isobutylidenediphenol and 2,2′-dihydroxy-3,3′-di-tert-butyl-5,5′-dimethyldiphenyl sulfide. Among these, 2,4′-dihydroxypentane, catechol, 2,2′-biphenyldiol, 1,1′-bi-2-naphthol, 4,4′,6,6′-tetra-tert-butyl-2,2′-methylenediophenol, 4,4′-dimethyl-6,6′-di-tert-butyl-2,2′-methylenediphenol, 4,4′,6,6′-tetramethyl-2,2′-isobutylidenediphenol and 2,2′-dihydroxy-3,3′-di-tert-butyl-5,5′-dimethyldiphenyl sulfide give preferred results.

When these catalyst systems are used in olefin polymerization, either of the system comprising the catalyst components (A) and (B) or the one comprising the catalyst components (A), (B) and (C) may be used. For example, in the case of propylene polymerization, the catalyst system comprising the catalyst components (A) and (B) mainly gives non-crystalline polymers having a high molecular weight or crystalline polymers having a low molecular weight. In the polymerization with the catalyst system comprising the catalyst components (A), (B) and (C), crystalline polymers having an isotactic regularity are produced depending upon the kinds of the components (A) and (C).

As to the amounts of these catalyst components used, for example in the case of solvent polymerization, the catalyst component (A) can be used in a range of $10^{-10}$ to $10^3$ mmol/liter, preferably $10^{-7}$ to $10^2$ mmole/liter as a vanadium atom. The catalyst component (B) can be used in a rate of 1 to 100,000, preferably 10 to 10,000, as Al:V atomic ratio, based on the catalyst component (A). The catalyst component (C) can be used in a rate of 0.01 to 4 (molar ratio) based on the vanadium atom of the catalyst component (A).

Before the catalyst component (C) is used in the polymerization, it is necessary to react the component (C) with the catalyst component (A) in advance. The reaction can be carried out at a temperature of -20° to 200°C in a solvent such as hydrocarbon solvents, halogenated hydrocarbon solvents or polar solvents (e.g. ether). The catalyst component (C) may directly be used in the polymerization. When the catalyst component (A) is a halogen-containing vanadyl compound, ammonia , pyridine or alkylamine may be added to the reaction system in order to catch a hydrogen halide generated during the reaction. In this case, it is desirable to use the catalyst component (C) after removing the precipitated hydrogen halide-containing compound. Alternatively, prior to the polymerization, the catalyst component (C) may previously be converted to metal alcoholates, metal phenolates or metal naphtholates by reacting the catalyst component (C) with an alkali metal (e.g. metallic sodium) or alkali metal hydride (e.g. lithium hydride). In this case, it is desirable to use these alcoholates, phenolates or naphtholates in the polymerization after removing the precipitated alkali metal salt. Further, when the catalyst component (A) contains a hydrocarbyloxy group, prior to the polymerization, the catalyst component (C) may previously be converted to an ester compound by reacting it with a carboxylic acid (e.g. acetic acid).

In reacting the vanadyl compound with the organic compound having at least two hydroxyl groups, it is considered that there is produced a compound having a form wherein at least two hydroxyl groups of said organic compound have been bonded to the same vanadium atom.

The olefin usable in the present invention is a $C_2$-$C_{10}$ olefin, and its specific examples include ethylene, propylene, butene-1, 4-methylpentene-1, hexene-1, octene-1 and vinylcyclohexane. The olefin of the present invention, however, is not limited to these compounds. These compounds may be used, alone or in combination, for homopolymerization or copolymerization.

The polymerization method of the present invention is not critical. For example, there can be used solvent polymerization and solution polymerization with aliphatic hydrocarbon solvents (e.g. butene, pentane, hexane, heptane, octane), aromatic hydrocarbon solvents (e.g. benzene, toluene) or halogenated hydrocarbon solvents (e.g. methylene chloride); bulk polymerization with the monomer as a solvent and gas-phase polymerization carried out in a gaseous monomer. Further, either of continuous polymerization or batch-form polymerization may be used.

The polymerization temperature is in the range of -50°C to 200°C, and particularly, a range of -20°C to 100°C is preferred. The polymerization pressure is preferably normal pressure to 60 kg/cm$^2$G. Generally, the polymerization time is properly determined depending upon the kind of desired polymers and reaction apparatus, and it is in a range of 5 minutes to 40 hours. For example, the polymerization time is preferably 5 minutes to 10 hours for ethylene polymerization, and 30 minutes to 20 hours for propylene polymerization.

The effect of the present invention will be illustrated specifically with reference to the following examples and comparative examples, but the present invention is not limited to these examples.

In the examples, the molecular weight was shown by a weight average molecular weight calculated using gel permeation chromatography (GPC). GPC was carried out with a model 150C produced by Waters Co. The measurement was made at 140°C using o-dichlorobenzene as a solvent. For the measurement, three Shodex 80MS columns were used. As polystyrene for making a calibration curve, fourteen kinds of unidispersed standard polystyrene having a molecular weight in a range of 500 to 6.8 x $10^6$ were used. The molecular weight was shown by a weight average molecular weight obtained from an average molecular weight, converted to a polystyrene basis, according to the Universal method.

The isotactic stereoregularity of polymers obtained in the propylene polymerization was evaluated based on the isotactic triad molar fraction [hereinafter referred to as (mm) fraction] obtained from $^{13}$C-NMR spectrum. The measure-

ment was made at 135°C using a spectrometer (FX-100; produced by Nippon Denshi Co.). The polymer was used in solution in o-dichlorobenzene. The (mm) fraction was obtained from the enlarged spectrum of a methyl carbon region.

Example 1

(1) Synthesis of methyl aluminoxane [catalyst component (B)]

The air in a 0.5-liter flask equipped with a stirrer, a dropping funnel and a reflux condenser was replaced by argon, and then 38.2 g (0.15 mole) of $CuSO_4 \cdot 5H_2O$ was suspended in 200 ml of toluene in the flask. A solution comprising 0.58 mole of trimethylaluminum and 100 ml of toluene was added dropwise to the flask in 5 hours while maintaining the inner temperature at 25°C with stirring. After completion of the addition, stirring was continued at room temperature for 20 hours. After removing formed precipitates, the solvent was removed under reduced pressure to obtain 15.8 g of methyl aluminoxane. In the polymerization, methyl aluminoxane used was diluted with toluene (0.05 g/ml). Methyl aluminoxane synthesized here was also used in the following examples.

(2) Polymerization of propylene

The air in a 130-ml stainless steel autoclave in which stirring was carried out with a magnetic stirrer was replaced by argon, and then 0.1 $\mu\ell$ (V: 2.2 x $10^{-6}$ mole) of a heptane solution of vanadium oxychloride which was the catalyst component (A), 0.15 g of methyl aluminoxane and 3 ml of toluene were added to the autoclave. After cooling the autoclave to -70°C, 30 g of propylene was introduced. The contents of the autoclave were kept at 30°C for 1 hour with stirring. After discharging excess propylene, the polymer was recovered.

The polymer was washed with 1N-HCl/methanol solution and then with methanol and dried. The yield of the polymer thus obtained was 0.013 g, which corresponded to an activity of 5,900 g/mole of a vanadium atom. This polymer had a molecular weight of 14,900 and a (mm) fraction of 0.47.

Comparative Example 1

Polymerization was carried out in the same manner as in Example 1 except that 1 ml of ethylaluminum sesquichloride (Al: 1.62 x $10^{-4}$ mmole) was added in place of aluminoxane at the time of propylene polymerization. However, the polymer was not obtained.

Example 2

The procedure was carried out in the same manner as in Example 1 except that 1 ml of a n-butoxy vanadate solution (V: 2.74 x $10^{-5}$ mmole) was used as the catalyst component (A). The yield of the resulting polymer was 0.043 g, which corresponded to an activity of 1570 g/mole of a vanadium atom. This polymer had a molecular weight of 1,200,000 and a (mm) fraction of 0.45.

Example 3

(1) Rection of catalyst component (A) with catalyst component (C)

The air in a 200-ml flask equipped with a stirrer, a dropping funnel and a reflux condenser was replaced by argon, and 70 ml of n-pentane and 2.8 x $10^{-3}$ mole of bis(2-hydroxy-3-tert-butyl-5-methylphenyl)sulfide were added. The contents of the flask were cooled to 0°C. Subsequently, a solution comprising 30 ml of n-pentane and 2.8 x $10^{-3}$ mole of vanadium oxychloride was gradually added dropwise from the dropping funnel. After stirring was continued at 0°C for 5 hours, the temperature was raised to room temperature, and then stirring was continued for further 2 days. Blackish brown precipitates were recovered by filtration, washed twice with n-pentane and dried to obtain 0.92 g of a reaction product.

(2) Polymerization of propylene

Polymerization was carried out in the same manner as in Example 1 except that 1 mg of the solid obtained in (1) was used as the catalyst component (A). The yield of the resulting polymer was 4.11 g. This polymer had a molecular weight of 1,850,000 and a (mm) fraction of 0.35.

Example 4

(1) Reaction of catalyst component (A) with catalyst component (C)

In the reaction of the catalyst component (A) with the catalyst component (C) in Example 3, the procedure was carried out in the same manner as in Example 3 except that 1.3 mmoles of 4,4′-dimethyl-6,6′-di-tert-butyl-2,2′-methylenediphenol was used in place of bis(2-hydroxy-3-methyl-5-tert-butylphenyl)sulfide, and n-butyl ether was used as a solvent in place of n-pentane. Thus, 0.25 g of a blackish brown solid was obtained.

(2) Polymerization of propylene

Polymerization was carried out in the same manner as in Example 2 except that 1 x $10^{-3}$ g of the solid obtained in (1) was used as the catalyst component (A). The yield of the resulting polymer was 0.53 g. This polymer had a molecular weight of 1,630,000 and a (mm) fraction of 0.43.

Example 5

(1) Rection of catalyst component (A) with catalyst component (C)

In the reaction of the catalyst component (A) with the catalyst component (C) in Example 3, the procedure was carried out similarly except that 3.5 mmoles of n-butoxy vanadate was used in place of vanadium oxychloride, n-heptane was used as a solvent and the reaction was carried out at room temperature for 2 days. Thus, 0.66 g of a black solid was obtained.

(2) Polymerization of propylene

Polymerization was carried out in the same manner as in Example 1 except that 1 mg of the solid obtained in (1) was used as the catalyst component (A). The yield of the resulting polymer was 0.79 g. This polymer had a molecular weight of 2,100,000 and a (mm) fraction of 0.68.

Example 6

The procedure was carried out in the same manner as in Example 3 except that, in place of the methyl aluminoxane solution used as the catalyst component (B), a mixed solution of 0.26 g of methyl aluminoxane synthesized in Example 1 and 0.2 ml of a toluene solution of ethylaluminum sesquichloride (Al: 4.0 x $10^{-5}$ mole) was added to the autoclave.

The yield of the resulting polymer was 6.63 g. This polymer had a molecular weight of 2,440,000 and a (mm) fraction of 0.32.

Example 7

(1) Polymerization of ethylene

To a 130-ml stainless steel autoclave were added 80 ml of toluene, 5 x $10^{-6}$ g of the solid obtained in (1) of Example 3 and 0.35 g of methyl aluminoxane in this order, and the inner temperature of the autoclave was kept at 60°C. Subsequently, ethylene was introduced into the autoclave continuously while maintaining the pressure in the system at 9 $kg/cm^2G$. Thus, ethylene was polymerized for 10 minutes. After completion of the reaction, methanol was added to decompose the catalyst, and the resulting polymer was dried to obtain 0.25 g of polyethylene. The molecular weight of the polyethylene was 1,530,000.

Comparative Example 2

Polymerization was carried out in the same manner as in Example 7 except that 10 ml of a toluene solution of ethylaluminum sesquichloride (Al: 1.2 mmoles) was added in place of methyl aluminoxane at the time of ethylene polymerization. The yield of the resulting polyethylene was 0.01 g, and the polyethylene had a molecular weight of 1,670,000.

## Claims

1. A method for producing olefin polymers which comprises homopolymerizing an olefin or copolymerizing two or more olefins at a temperature range of -50°C to 200°C using a catalyst system comprising:

   catalyst component (A): a vanadium compound represented by the formula $VOX_3$ in which X represents a halogen atom, or $VO(OR)_3$ in which R represents a $C_1$-$C_{20}$ hydrocarbon group, and
   catalyst component (B): an aluminoxane obtained by the reaction of a trialkylaluminum represented by the formula $AlR^a_3$ in which $R^a$ represents a $C_1$-$C_{10}$ alkyl group with water, or a mixture of said aluminoxane and an aluminum compound represented by the formula $AlR'_nX'_{3-n}$ in which R' represents a $C_1$-$C_{10}$ alkyl group, X′ represents a halogen atom and n represents a number selected from 0, 1, 2 and 3, and
   catalyst component (C): an organic compound having at least two hydroxyl groups which is reacted with catalyst component (A) before use.

2. A method according to Claim 1, wherein the catalyst component (C) is an organic compound having at least two hydroxyl groups represented by the formula I, II, III, IV, V or VI:

$$HO - R'' - (Y)_{n}' - R''' - OH \qquad (I)$$

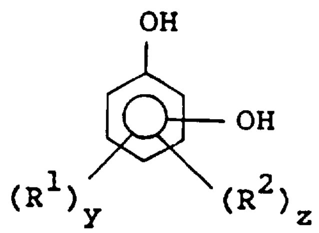

(II)

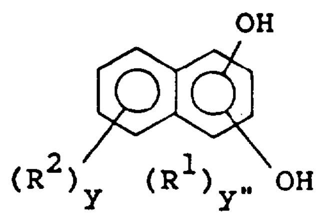

(III)

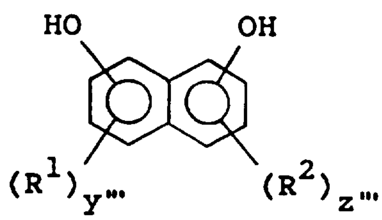

(IV)

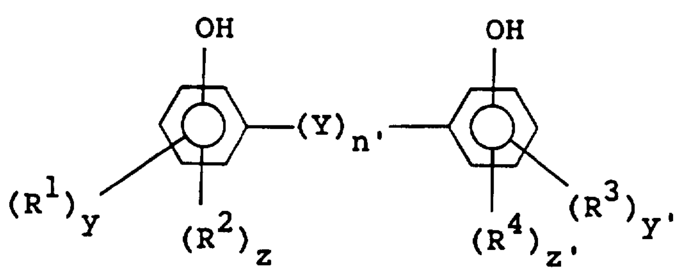

(V)

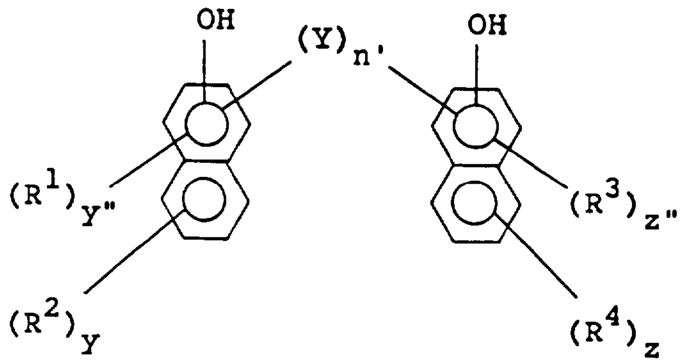

(VI)

wherein each of R″ and R‴ represents a $C_1$-$C_{20}$ hydrocarbon group; Y represents a $C_1$-$C_{20}$ hydrocarbon group, -O-, -S-, -S-S-,

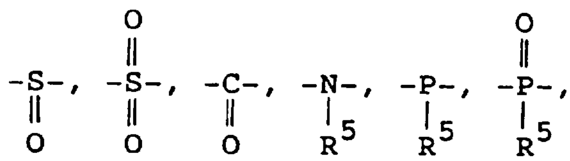

or

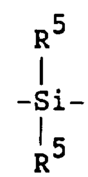

(in which $R^5$ represents a hydrogen atom or a $C_1$-$C_6$ hydrocarbon group); each of $R^1$, $R^2$, $R^3$ and $R^4$, which may be the same or different, represents a $C_1$-$C_{20}$ hydrocarbon, hydroxyl, nitro, nitrile or hydrocarbyloxy group or a halogen atom; n' is an integer of 0, or 1 or more and represents the number of repeats of a unit Y; each of y, y′, y″, y‴, z, z', z" and z‴ represents the number of substituents bonded to the aromatic ring; each of y, y', z and z' represents an integer of 0, or 1 to 4; each of y" and z" represents an integer of 0, or 1 to 2; and each of y‴ and z‴ represents an integer of 0, or 1 to 3.

**3.** A method according to Claim 1, wherein the vanadium compound is vanadium oxytrichloride, vanadium oxytribromide, and vanadium compounds of the formula $VO(OR)_3$, wherein R represents methyl, ethyl, n-propyl, isopropyl, n-butyl, isobutyl, tert-butyl, 1-methylbutyl, 2-methylbutyl, neopentyl, 2-ethylbutyl, cyclohexyl, alkylcyclohexyl or phenyl.

**4.** A method according to Claim 1, wherein the aluminoxane is represented by the formula $R^a(AlR^aO)_nAlR^a$ and/or $(AlR^aO)_{n+1}$, in which $R^a$ represents $C_1$-$C_{10}$ alkyl group and n is 1 to 40.

**5.** A method according to Claim 4, wherein $R^a$ represents a methyl, ethyl, propyl, butyl, or pentyl group.

**6.** A method according to Claim 1, wherein the aluminum compound in the catalyst component (B) is methylaluminum dichloride, ethylaluminum dichloride, n-propylaluminum dichloride, ethylaluminum sesquichloride, dimethylaluminum chloride, diethylaluminum chloride, di-n-propylaluminum chloride, trimethylaluminum, triethylaluminum, triisobutylaluminum, ethyldicyclohexylaluminum, triphenylaluminum, diethylaluminum bromide, diethylaluminum iodide, aluminum trichloride or aluminum tribromide.

**7.** A method according to Claim 2, wherein the catalyst component (C) is an organic compound represented by the formula V.

**8.** A method according to Claim 7, wherein the y, y′, z and z' are 1, respectively, in the formula V of the organic compound.

**9.** A method according to Claim 2, wherein the catalyst compound (C) is an organic compound represented by the

formula VI.

**10.** A method according to Claim 9, wherein the y, y", z and z" are 1, respectively, in the formula VI of the organic compound.

**11.** A method according to claim 7, 8, 9 or 10, wherein the catalyst component (C) is an organic compound represented by the formula V or VI in which the n' is 1 and the Y is a hydrocarbon group of 1 to 20 carbon atom.

**12.** A method according to Claim 7, 8, 9 or 10, wherein the catalyst component (C) is an organic compound represented by the formula V or VI in which the n' is 1 and the Y is -O-, -S-, -S-S-,

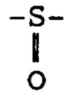, 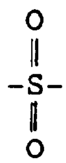, 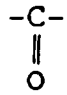, 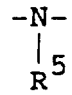, 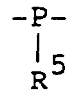

or

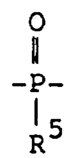 .

**13.** A method according to Claim 12, wherein the Y is -S- in the organic compound of the formula V or VI.

**14.** A method according to Claim 1, wherein the catalyst component (C) is 2,4-dihydroxypentane, 2-(2-hydroxypropyl) phenol, catechol, resorcinol, 4-isopropylcatechol, 3-methoxycatechol, 1,8-dihydroxynaphthalene, 1,2-dihydroxynaphthalene, 2,2′-biphenyldiol, 1,1'-bi-2-naphthol, 2,2'-dihydroxy-6,6'-dimethylbiphenyl, 4,4',6,6'-tetra-tert butyl-2,2'-methylenediphenol, 4,4'-dimethyl-6,6'-di-tert-butyl-2,2'-methylenediphenol, 4,4',6,6'-tetramethyl-2,2'-isobutylidenediphenol, or 2,2'-dihydroxy-3,3'-di-tert-butyl-5,5'-dimethyldiphenyl sulfide.

**15.** A method according to Claim 1, wherein the olefin is ethylene, propylene, butene-1, 4-methylpentene-l, hexene-1, octene-1, or vinylcyclohexane.

**16.** A method according to Claim 1, wherein the polymerization of the olefin is carried out under a pressure of normal pressure to 60 kg/cm$^2$G.

**17.** A method according to Claim 1, wherein the polymerization of the olefin is carried out for 5 minutes to 40 hours.

**Patentansprüche**

**1.** Verfahren zur Herstellung von Olefinpolymeren, umfassend die Homopolymerisierung eines Olefins oder die Copolymerisierung von zwei oder mehr Olefinen in einem Temperaturbereich von -50°C bis 200°C unter Verwendung eines Katalysatorsystems, das umfaßt:

Katalysatorkomponente (A): eine Vanadiumverbindung der Formel $VOX_3$, in der X ein Halogenatom ist, oder $VO(OR)_3$, in der R ein $C_1$ -$C_{20}$-Kohlenwasserstoffrest ist, und
Katalysatorkomponente (B): ein durch die umsetzung einer Trialkylaluminiumverbindung der Formel $AlR^a{}_3$, in der $R^a$ einen $C_1$-$C_{10}$-Alkylrest darstellt, mit Wasser erhaltenes Aluminoxan oder ein Gemisch des Aluminoxans und einer Aluminiumverbindung der Formel $AlR'_nX'_{3-n}$, in der R' einen $C_1$-$C_{10}$-Alkylrest bedeutet, X' ein Halogenatom darstellt und n eine der Zahlen 0, 1, 2 oder 3 ist und
Katalysatorkomponente (C): eine organische Verbindung mit mindestens zwei Hydroxylgruppen, die mit der Katalysatorkomponente (A) vor Verwendung umgesetzt wird.

**2.** Verfahren nach Anspruch 1, in dem die Katalysatorkomponente (C) eine organische Verbindung mit mindestens zwei Hydroxylgruppen der Formel I, II, III, IV, V oder VI ist:

$$HO - R'' - (Y)_{n}' - R''' - OH \qquad (I)$$

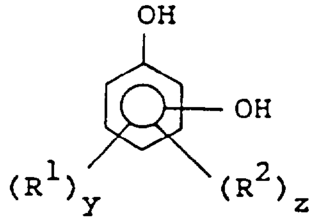

(II)

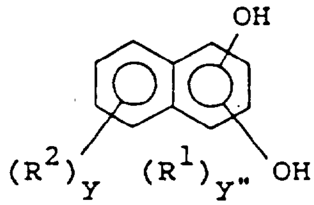

(III)

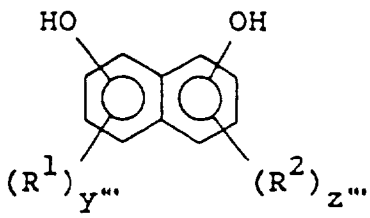

(IV)

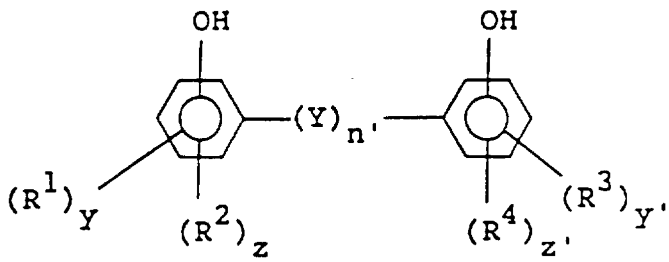

(V)

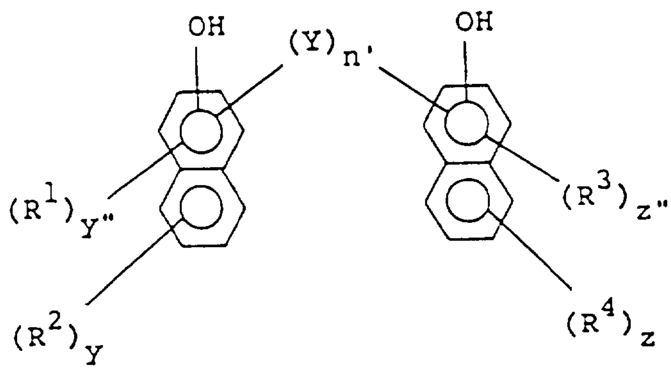

(VI)

worin jeder der Reste R" und R''' einen $C_1$-$C_{20}$-Kohlenwasserstoffrest darstellt; Y ein $C_1$-$C_{20}$-Kohlenwasserstoffrest, -O-, -S-, -S-S-,

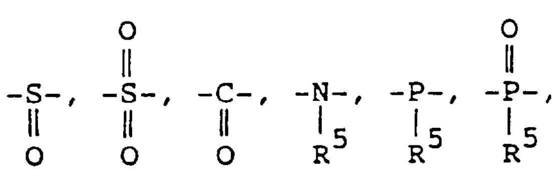 oder 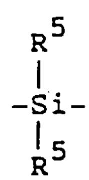

(in dem $R^5$ ein Wassserstoffatom oder einen $C_1$-$C_6$-Kohlenwasserstoffrest bedeutet) ist; jeder der Reste $R^1$, $R^2$, $R^3$

und $R^4$, die gleich oder verschieden sein können, einen $C_1$-$C_{20}$-Kohlenwasserstoffrest, eine Hydroxyl-, Nitro-, Nitril- oder Hydrocarbyloxygruppe oder ein Halogenatom darstellt; n' eine ganze Zahl, wie 0 oder 1 oder mehr, ist und die Zahl der Wiederholungen einer Einheit Y darstellt; y, y', y", y"', z, z', z" und z"' die Zahl der an den aromatischen Ring gebundenen Substituenten bedeuten; y, y', z und z' eine ganze Zahl von 0 oder 1 bis 4 darstellen; y" und z" eine ganze Zahl von 0 oder 1 bis 2 bedeuten und y"' und z"' eine ganze Zahl von 0 oder 1 bis 3 bedeuten.

**3.** Verfahren nach Anspruch 1, in dem die Vanadiumverbindung Vanadiumoxytfichlorid, Vanadiumoxytribromid und Vanadiumverbindungen der Formel $VO(OR)_3$, worin R eine Methyl-, Ethyl-, n-Propyl-, Isopropyl-, n-Butyl-, Isobutyl-, tert-Butyl-, 1-Methylbutyl-, 2-Methylbutyl-, Neopentyl-, 2-Ethylbutyl-, Cyclohexyl-, Allylcyclohexyl- oder Phenylgruppe darstellt.

**4.** Verfahren nach Anspruch 1, in dem das Aluminoxan die Formel $R^a(AlR^aO)_nAlR^a$ und/oder $(AlR^aO)_{n+1}$ besitzt, in denen $R^a$ einen $C_1$-$C_{10}$-Alkylrest darstellt und n 1 bis 40 ist.

**5.** Verfahren nach Anspruch 4, in dem $R^a$ eine Methyl-, Ethyl-, Propyl-, Butyl- oder Pentylgruppe darstellt.

**6.** Verfahren nach Anspruch 1, in dem die Aluminiumverbindung in der Katalysatorkomponente (B) Methylaluminiumdichlorid, Ethylaluminiumdichlorid, n-Propylaluminiumdichlorid, Ethylaluminiumsesquichlorid, Dimethylaluminiumchlorid, Diethylaluminiumchlorid, Di-n-propylaluminiumchlorid, Trimethylaluminium, Triethylaluminium, Triisobutylaluminium, Ethyldicyclohexylaluminium, Triphenylaluminium, Diethylaluminiumbromid, Diethylaluminiumiodid, Aluminiumtrichlorid oder Aluminiumtribromid ist.

**7.** Verfahren nach Anspruch 2, in dem die Katalysatorkomponente (C) eine organische Verbindung der Formel V ist.

**8.** Verfahren nach Anspruch 7, in dem y, y', z und z' in der Formel V der organischen Verbindung jeweils 1 sind.

**9.** Verfahren nach Anspruch 2, in dem die Katalysatorkomponente (C) eine organische Verbindung der Formel VI ist.

**10.** Verfahren nach Anspruch 9, in dem y, y", z und z" in der Formel VI der organischen Verbindung jeweils 1 sind.

**11.** Verfahren nach Anspruch 7, 8, 9 oder 10, in dem die Katalysatorkomponente (C) eine organische Verbindung der Formel V oder VI ist, in der n' 1 ist und das Y einen Kohlenwasserstoffrest mit 1 bis 20 Kohlenstoffatomen bedeutet.

**12.** Verfahren nach Anspruch 7, 8, 9 oder 10, in dem die Katalysatorkomponente (C) eine organische Verbindung der Formel V oder VI ist, in der n' 1 ist und das Y -O-, -S-, -S-S-,

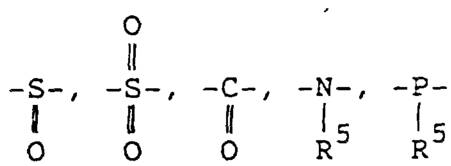

oder

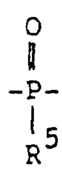

bedeutet.

**13.** Verfahren nach Anspruch 12, in dem Y in der organischen Verbindung der Formel V oder VI -S- ist.

**14.** Verfahren nach Anspruch 1, in dem die Katalysatorkomponente (C) 2,4-Dihydroxypentan, 2-(2-Hydroxypropyl)phenol, Brenzcatechin, Resorcin, 4-Isopropylbrenzcatechin, 3-Methoxybrenzcatechin, 1,8-Dihydroxynaphthalin, 1,2-Dihydroxynaphthalin, 2,2'-Biphenyldiol, 1,1'-Bi-2-naphthol, 2,2'-Dihydroxy-6,6'-dimethylbiphenyl, 4,4',6,6'-Tetra-tert-butyl-2,2'-methylendiphenol, 4,4'-Dimethyl-6,6'-ditert-butyl-2,2'-methylendiphenol, 4,4',6,6'-Tetramethyl-2,2'-isobutylidendiphenol oder 2,2'-Dihydroxy-3,3'-di-tert-butyl-5,5'-dimethyldiphenylsulfid ist.

**15.** Verfahren nach Anspruch 1, in dem das Olefin Ethylen, Propylen, Buten-1,4-Methylpenten-1, Hexen-1, Octen-1 oder Vinylcyclohexan ist.

**16.** Verfahren nach Anspruch 1, in dem die Polymerisierung des Olefins unter einem Druck von Normaldruck bis 60 $kg/cm^2G$ durchgeführt wird.

**17.** Verfahren nach Anspruch 1, in dem die Polymerisierung des Olefins in 5 Minuten bis 40 Stunden durchgeführt wird.

**Revendications**

**1.** Procédé de préparation de polymères d'oléfines, consistant à homopolymériser une oléfine ou à copolymériser deux oléfines ou plus, à une température dans la gamme de -50°C à 200°C, en utilisant un système catalytique qui comprend:

un composant de catalyseur (A), à savoir un composé du vanadium répondant à la formule $VOX_3$, dans laquelle X représente un atome d'halogène, ou $VO(OR)_3$, dans laquelle R représente un groupement hydrocarboné en $C_1$-$C_{20}$,
un composant de catalyseur (B), à savoir un aluminoxane obtenu par réaction d'un trialkylaluminium répondant à la formule $AlR^a_3$, dans laquelle $R^a$ représente un groupement alkyle en $C_1$-$C_{10}$, avec de l'eau, ou un mélange dudit aluminoxane et d'un composé de l'aluminium répondant à la formule $AlR'_nX'_{3-n}$, dans laquelle R' représente un groupement alkyle en $C_1$-$C_{10}$, X' représente un atome d'halogène et n représente un nombre choisi parmi 0, 1, 2 et 3, et
un composant de catalyseur (C), à savoir un composé organique comportant au moins deux groupements hydroxy, qui est mis en réaction avec le composant de catalyseur (A) avant l'utilisation.

**2.** Procédé selon la revendication 1, dans lequel le composant de catalyseur (C) est un composé organique comportant au moins deux groupements hydroxy, répondant à la formule I, II, III, IV, V ou VI:

$$HO - R'' - (Y)_n' - R''' - OH \qquad (I)$$

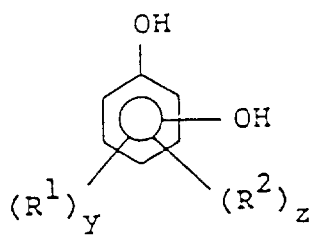

(II)

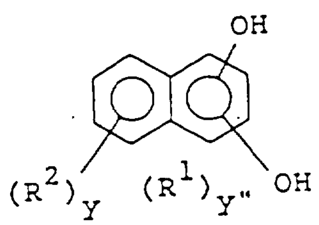

(III)

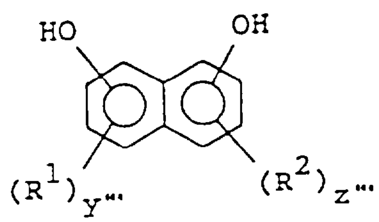

(IV)

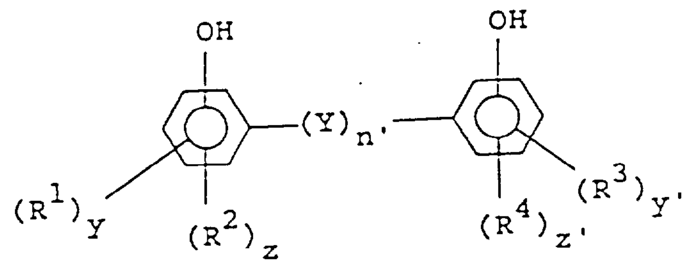

(V)

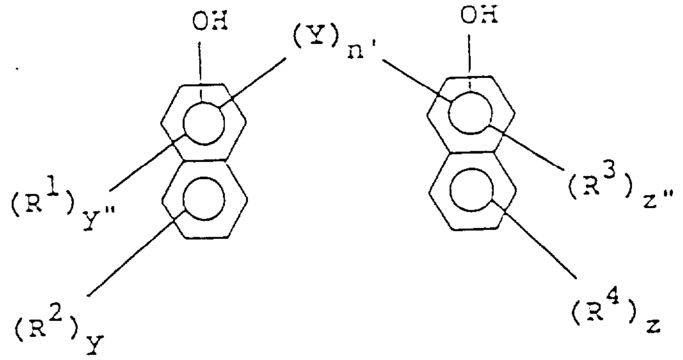

(VI)

dans laquelle R" et R''' représentent chacun un groupement hydrocarboné en $C_1$-$C_{20}$; Y représente un groupement hydrocarboné en $C_1$-$C_{20}$, -O-, -S-, -S-S-,

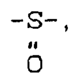

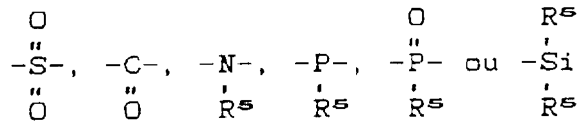

(où $R^5$ représente un atome d'hydrogène ou un groupement hydrocarboné en $C_1$-$C_6$); $R^1$, $R^2$, $R^3$ et $R^4$, qui peuvent être identiques ou différents, représentent chacun un groupement hydrocarboné en $C_1$-$C_{20}$, hydroxy, nitro, nitrile ou hydrocarbyloxy ou un atome d'halogène; n' est un nombre entier égal à 0 ou à 1 ou plus et représente le nombre de répétitions d'un motif Y; y, y', y", y''', z, z', z" et z''' représentent chacun le nombre de substituants liés au noyau aromatique; y, y', z et z' représentent chacun un nombre entier égal à 0 ou à 1-4; y" et z" représentent chacun un nombre entier égal à 0 ou à 1-2; et y''' et z''' représentent chacun un nombre entier égal à 0 ou à 1-3.

3. Procédé selon la revendication 1, dans lequel le composé du vanadium est l'oxytrichlorure de vanadium, l'oxytribromure de vanadium ou un composé du vanadium de formule $VO(OR)_3$, dans laquelle R représente un groupement méthyle, éthyle, n-propyle, isopropyle, n-butyle, isobutyle, tert.-butyle, 1-méthylbutyle, 2-méthylbutyle, néopentyle, 2-éthylbutyle, cyclohexyle, allylcyclohexyle ou phényle.

4. Procédé selon la revendication 1, dans lequel l'aluminoxane répond à la formule $R^a(AlR^aO)_nAlR^a$ et/ou $(AlR^aO)_{n+1}$, dans laquelle $R^a$ représente un groupement alkyle en $C_1$-$C_{10}$ et n est mis pour un nombre de 1 à 40.

5. Procédé selon la revendication 4, dans lequel $R^a$ représente un groupement méthyle, éthyle, propyle, butyle ou pentyle.

6. Procédé selon la revendication 1, dans lequel le composé de l'aluminium dans le composant de catalyseur (B) est le dichlorure de méthylaluminium, le dichlorure d'éthylaluminium, le dichlorure de n-propylaluminium, le sesquichlorure d'éthylaluminium, le chlorure de diméthylaluminium, le chlorure de diéthylaluminium, le chlorure de di-n-propylaluminium, le triméthylaluminium, le triéthylaluminium, le triieobutylaluminium, l'éthyldicyclohexylaluminium, le triphénylaluminium, le bromure de diéthylaluminium, l'iodure de diéthylaluminium, le trichlorure d'aluminium ou le tribromure d'aluminium.

7. Procédé selon la revendication 2, dans lequel le composant de catalyseur (C) est un composé organique répondant

à la formule V.

**8.** Procédé selon la revendication 7, dans lequel y, y', z et z' sont mis chacun pour 1 dans la formule V du composé organique.

**9.** Procédé selon la revendication 2, dans lequel le composant de catalyseur (C) est un composé organique qui répond à la formule VI.

**10.** Procédé selon la revendication 9, dans lequel y, y", z et z" sont mis chacun pour 1 dans la formule VI du composé organique.

**11.** Procédé selon l'une quelconque des revendications 7, 8, 9 et 10, dans lequel le composant de catalyseur (c) est un composé organique répondant à la formule V ou VI dans laquelle n' est mis pour 1 et Y représente un groupement hydrocarboné à 1-20 atomes de carbone.

**12.** Procédé selon l'une quelconque des revendications 7, 8, 9 et 10, dans lequel le composant de catalyseur (C) est un composé organique répondant a la formule V ou VI dans laquelle n' est mis pour 1 et Y représente -O-, -S-, -S-S-,

$$-\underset{\overset{\|}{O}}{S}-,\quad -\overset{\underset{\|}{O}}{\underset{\overset{\|}{O}}{S}}-,\quad -\underset{\overset{\|}{O}}{C}-,\quad -\underset{\overset{|}{R^5}}{N}-,\quad -\underset{\overset{|}{R^5}}{P}-\ \text{ou}\ -\overset{\underset{\|}{O}}{\underset{\overset{|}{R^5}}{P}}-\ .$$

**13.** Procédé selon la revendication 12, dans lequel Y représente -S- dans le composé organique de formule V ou VI.

**14.** Procédé selon la revendication 1, dans lequel le composant de catalyseur (C) est le 2,4-dihydroxypentane, le 2-(2-hydroxypropyl)phénol, le catéchol, le résorcinol, le 4-isopropylcatéchol, le 3-méthoxycatéchol, le 1,5-dihydroxynaphtalène, le 1,2-dihydroxynaphtalène, le 2,2'-biphénylediol, le 1,1'-bi-2-naphtol, le 2,2' -dihydroxy-6,6' -diméthylbiphényle, le 4,4',6,6'-tétra-tert.-butyl-2,2'-méthylènediphénol, le 4,4'-diméthyl-6,6'-di-tert.-butyl-2,2'-méthylènediphénol, le 4,4',6,6'-tétraméthyl-2,2'-isobutylidènediphénol ou le sulfure de 2,2'-dihydroxy-3,3'-di-tert.-butyl-5,5'-diméthyldiphényle.

**15.** Procédé selon la revendication 1, dans lequel l'oléfine est l'éthylène, le propylène, le butène-1, le 4-méthylpentène-1, l' hexène-1, l'octéne-1 ou le vinylcyclohexane.

**16.** Procédé selon la revendication 1, dans lequel la polymérisation de l'oléfine est effectuée sous une prosition comprise entre la pression normale et 60 $kg/cm^2G$.

**17.** Procédé selon la revendication 1, dans lequel la polymérisation de l'oléfine est effectuée pendant une période de 5 min à 40 h.

FIG. 1

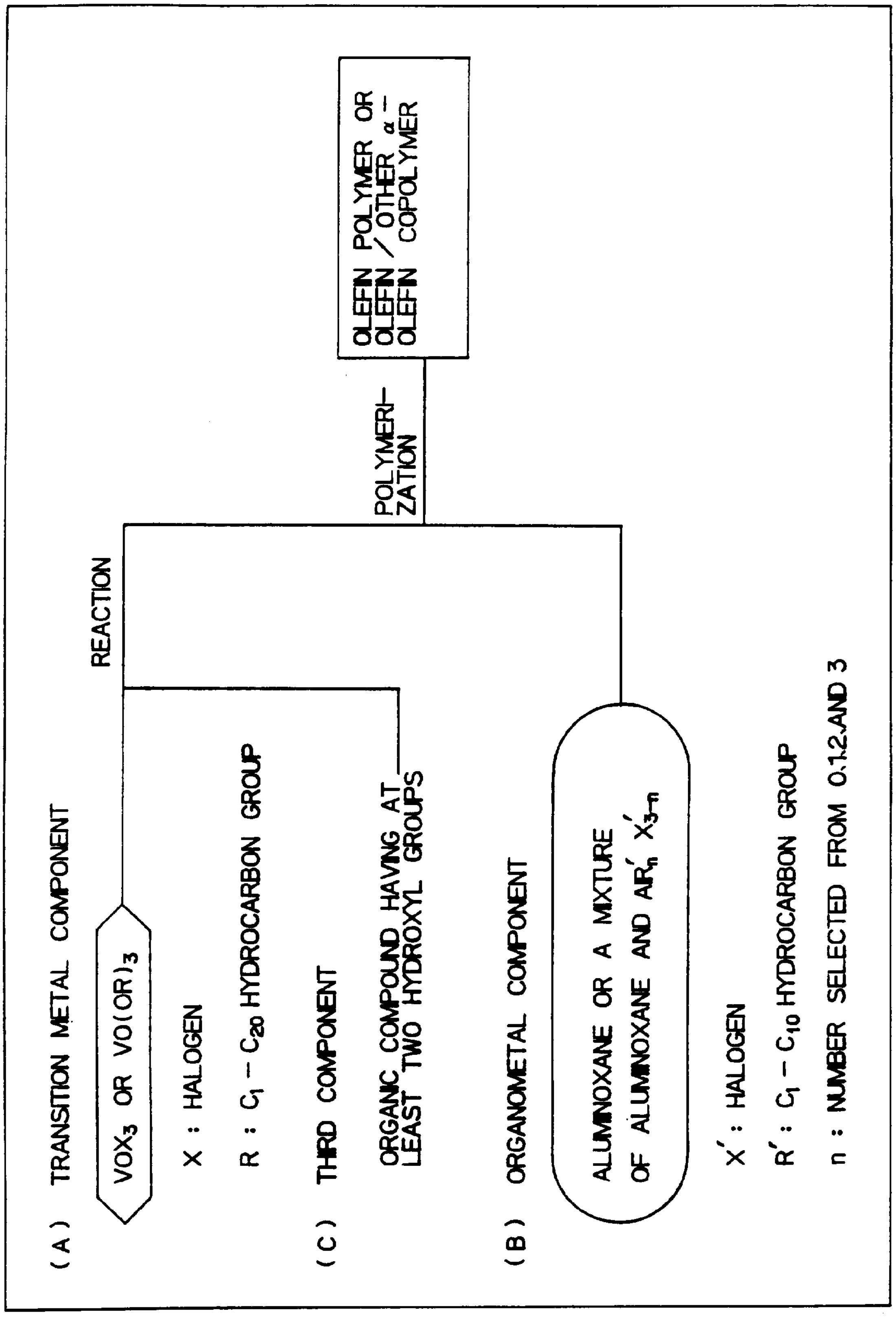
(A) TRANSITION METAL COMPONENT
$VOX_3$ OR $VO(OR)_3$
X : HALOGEN
R : $C_1 - C_{20}$ HYDROCARBON GROUP
(C) THIRD COMPONENT
ORGANIC COMPOUND HAVING AT LEAST TWO HYDROXYL GROUPS
(B) ORGANOMETAL COMPONENT
ALUMINOXANE OR A MIXTURE OF ALUMINOXANE AND $AR'_n X'_{3-n}$
X' : HALOGEN
R' : $C_1 - C_{10}$ HYDROCARBON GROUP
n : NUMBER SELECTED FROM 0.1.2.AND 3
REACTION
POLYMERI-ZATION
OLEFIN POLYMER OR OLEFIN / OTHER α - OLEFIN COPOLYMER